# EUROPÄISCHE PATENTSCHRIFT

(11) **EP 3 871 393 B1**
(45) Veröffentlichungstag und Bekanntmachung des Hinweises auf die Patenterteilung: **05.01.2022**
(21) Anmeldenummer: 19809060.7
(22) Anmeldetag: 25.11.2019
(51) Int. Cl.: H04L 29/06, H04L 29/08, H04L 12/40

(54) **VERFAHREN ZUR ÜBERWACHUNG EINES DATENÜBERTRAGUNGSSYSTEMS, DATENÜBERTRAGUNGSSYSTEM UND KRAFTFAHRZEUG**
METHOD FOR MONITORING A DATA TRANSMISSION SYSTEM, DATA TRANSMISSION SYSTEM AND MOTOR VEHICLE
PROCÉDÉ DE SURVEILLANCE D'UN SYSTÈME DE TRANSMISSION DE DONNÉES, SYSTÈME DE TRANSMISSION DE DONNÉES ET VÉHICULE À MOTEUR

(30) Priorität: 27.11.2018 DE 102018220324
(43) Veröffentlichungstag der Anmeldung: 01.09.2021
(73) Patentinhaber: Audi AG, 85045 Ingolstadt (DE)
(72) Erfinder: KLEIN, Markus, 85104 Pförring (DE); ZAWADZKI, Kamil, 81827 München (DE); AHN, Changsup, 85057 Ingolstadt (DE); STADLER, Wolfgang, 79312 Emmendingen (DE); SCHMIDT, Karsten, 85051 Ingolstadt (DE)
(86) Internationale Anmeldenummer: PCT/EP2019/082353
(87) Internationale Veröffentlichungsnummer: WO 2020/109200

(56) Entgegenhaltungen:
- EP-A1- 2 892 199
- EP-A1- 3 113 529
- US-A1- 2018 229 739

## Beschreibung

Die Erfindung betrifft ein Verfahren zur Überwachung eines Datenübertragungssystems, umfassend wenigstens eine Sendeeinrichtung zum Senden von Nachrichten, wenigstens eine Empfangseinrichtung zum Empfangen der Nachrichten, ein Datenübertragungsmittel zur Übertragung der Nachrichten und eine Überwachungseinrichtung, wobei das Datenübertragungsmittel insbesondere ein Fahrzeugbus oder ein fahrzeugseitiges Netzwerk eines Kraftfahrzeugs ist.

Komplexe EDV-Systeme sind inzwischen aus modernen Kraftfahrzeugen nicht mehr wegzudenken. Obwohl diese Entwicklung zwar einerseits eine wesentliche Verbesserung hinsichtlich des Fahrkomforts darstellt, bergen EDV-Systeme andererseits Fehlerrisiken, insbesondere vor dem Hintergrund ihrer Angreifbarkeit durch Schadsoftware.

Um einen entsprechenden Datenaustausch zwischen den Sendekomponenten und Empfangskomponenten bzw. -einrichtungen eines Datenübertragungssystems zu ermöglichen, sind diese über ein Übertragungsmittel miteinander verbunden, das typischerweise ein Datenbus oder ein für diesen Zweck geeignetes Netzwerk sein kann. In diesem Zusammenhang ist eine mögliche Sicherheitslücke insbesondere im Rahmen des After-Market-Bereichs denkbar, also beispielsweise bei der Wartung des Kraftfahrzeugs. So wird bei der Wartung häufig ein Lesegerät an das Übertragungsmittel angeschlossen um relevante, gegebenenfalls vorab während des Nutzungsbetriebs des Kraftfahrzeugs gespeicherte, Daten auszulesen und zu analysieren. Über das Lesegerät kann allerdings Schadsoftware oder dergleichen in das System gelangen.

Ein weiteres Problem insbesondere bezüglich des After-Market-Bereichs bei Kraftfahrzeugen ist es, dass an das Datenübertragungssystems gegebenenfalls Fremdgeräte angeschlossen werden könnten, was aus der Sicht des jeweiligen Fahrzeugherstellers nicht unbedingt gewünscht ist. So hat dieser naturgemäß ein Interesse daran hat, dass auch bei Reparaturen im Rahmen von Wartungs- bzw. Inspektionsarbeiten Originalteile verwendet werden. Zudem kann der Verbau von Fremdgeräten bei Eintritt eventueller Garantiefälle relevant sein, da hierbei gegebenenfalls ein Ausschluss der Garantieleistung vorliegen könnte. Häufig soll jedoch ein Anschluss solcher Geräte, z.B. als Medienzuspieler, nicht verhindert werden. Da für Fremdgeräte jedoch keine Qualitätskontrolle durch den Fahrzeughersteller erfolgen kann, sind Fehlfunktionen oder Sicherheitslücken dieser Geräte, die eine robuste Kommunikation über einen Bus oder ein Netzwerk stören könnten, nicht auszuschließen. Mithin ist es wünschenswert, derartige Fremdgeräte bzw. allgemein ein nicht erwünschtes Verhalten von angeschlossenen Einrichtungen mit möglichst wenig Aufwand identifizieren zu können.

Aus dem Stand der Technik sind bereits Ansätze zum Verbessern bzw. zur Erhöhung der Sicherheit von EDV-Systemen, insbesondere in Kraftfahrzeugen, bekannt. So schlägt beispielsweise DE 602 22 274 T2 ein Konzept zur Überwachung einer Schaltungsanordnung umfassend eine CPU-Schaltung vor, die über einen Kommunikationsbus mit verschiedenen Bus-Kommunikationsgeräten verbunden ist. Zu diesem Zweck ist eine rekonfigurierbare Schaltung an dem Kommunikationsbus angeschlossen, die in Abhängigkeit eines auf dem Kommunikationsbus auftretenden Ereignisses oder Ereignistyps durch die CPU-Schaltung rekonfiguriert wird, um das Ereignis entsprechend zu überwachen und eine Rückmeldung an die CPU-Schaltung zu liefern.

Die Druckschrift US 2018/0229739 A1 offenbar eine Überwachungseinrichtung. Diese umfasst eine Speichereinrichtung, die ein Kriterium zur Bestimmung der Normalität einer von einer ersten Einrichtung übertragenen Nachricht speichert, eine Empfangseinrichtung zum Empfang der Nachricht über einen Bus, eine Vergleichseinrichtung, die auf Basis der empfangenen Nachricht eine Vergleichsinformation zum Vergleich mit dem Kriterium generiert, und eine Antworteinrichtung, die bei Empfang einer Nachricht von einer zweiten Einrichtung auf Basis der Vergleichsinformation und des Kriteriums Informationen sendet, die eine Überprüfung ermöglichen, ob die erste Einrichtung eine gültige Einrichtung ist.

In dem Fahrzeugsicherheitssystem gemäß der Druckschrift EP 2 892 199 A1 ist wenigstens ein Modul dazu eingerichtet, Kommunikationsnachrichten in einem fahrzeugseitigen Netzwerk zu überwachen. Durch Daten einer Software werden Nachrichten charakterisiert, die durch wenigstens einen Knoten des Netzwerks im Normalbetrieb übertragen werden. Mit Hilfe dieser Software werden anormale empfangene Nachrichten identifiziert, die auf einen Cyberangriff hinweisen. In diesem Fall werden die anormale Nachricht betreffende Daten an eine Zentraleinrichtung gesendet.

Die der Erfindung zugrunde liegende Aufgabe besteht darin, eine Möglichkeit anzugeben, ein Datenübertragungssystem zu optimieren bzw. zu vereinfachen, insbesondere hinsichtlich der Überwachung der über das Datenübertragungssystem übertragenen Daten bzw. Nachrichten.

Die Erfindung wird in den unabhängigen Ansprüchen definiert. Gelöst wird die Aufgabe durch ein Verfahren der eingangs genannten Art, wobei
- die Überwachungseinrichtung eine Anfragenachricht an die Sendeeinrichtung und die Empfangseinrichtung sendet,
- die Sendeeinrichtung oder wenigstens eine der Sendeeinrichtungen in Abhängigkeit der Anfragenachricht und wenigstens einer von der jeweiligen Sendeeinrichtung über das Datenübertragungsmittel gesendeten Sendernachricht eine jeweilige Senderantwort generiert und an die Überwachungseinrichtung sendet,
- die Empfangseinrichtung oder wenigstens eine der Empfangseinrichtungen in Abhängigkeit der Anfragenachricht und wenigstens einer von der jeweiligen Empfangseinrichtung über das Datenübertragungsmittel empfangenen Empfängernachricht eine jeweilige Empfängerantwort generiert und an die Überwachungseinrichtung sendet, und
- die Überwachungseinrichtung die Senderantwort und die Empfängerantwort empfängt und die Erfüllung einer von der Senderantwort und der Empfängerantwort abhängenden Auslösebedingung überprüft, deren Erfüllung ein überwachungsrelevantes Ereignis anzeigt.

Mit anderen Worten sendet also die Überwachungseinrichtung die Anfragenachricht an beispielsweise jeweils eine Sendeeinrichtung sowie eine Empfangseinrichtung. Im Anschluss generiert die Sendeeinrichtung eine Senderantwort und die Empfangseinrichtung eine Empfängerantwort, wobei die Senderantwort von Sendernachrichten abhängt, die insbesondere nach dem Empfang der Anfragenachricht gesendet wurden, und wobei die Empfängerantwort von Empfängernachrichten abhängt, die insbesondere nach dem Empfangen der Anfragenachricht empfangen wurden. Die Empfängernachrichten werden hierbei zweckmäßigerweise derart gewählt, dass sie bei einem erwartungskonformen Betrieb des Datenübertragungssystems den von der Empfangseinrichtung empfangenen Sendernachrichten entsprechen. Ein zentraler, bei der Auswertung der Auslösebedingung zu erfüllende Zweck ist es, einen möglichst einfachen und aufwandsarmen Vergleich zwischen dem, was von der Sendeeinrichtung gesendet wurde und dem, was von der Empfangseinrichtung empfangen wurde, auf Basis eines Vergleichs der Senderantwort mit der Empfängerantwort, zu realisieren. Die Auslösebedingung kann hierbei insbesondere dann erfüllt sein, wenn anhand dieses Vergleichs erkannt wird, dass die Sendernachrichten nicht oder verfälscht bei der Empfangseinrichtung ankommen oder dass eine Empfängernachricht empfangen wurde, die keiner Sendernachricht entspricht.

Anhand dieses Vergleichs wird es also ermöglicht, Unstimmigkeiten zwischen den Sendernachrichten und den Empfängernachrichten, die z.B. auf einen Fehler des Datenübertragungssystems, insbesondere auf eine Fehlfunktion oder Manipulation des Datenübertragungssystems und/oder einer angeschlossenen Komponente, zurückzuführen sind, durch die Auswertung der Auslösebedingung zu identifizieren. Die vorliegende Erfindung stellt mithin ein Konzept bereit, das ohne großen Aufwand eine effektive Überwachung des Datenübertragungssystems, z.B. innerhalb eines Kraftfahrzeugs, ermöglicht. Vorzugsweise ist vorgesehen, dass der Nachrichtenvergleich nicht auf Basis der kompletten Nachrichten oder kompletter Nachrichtenfelder erfolgt, sondern stattdessen auf der Basis der von den Nachrichten abhängenden und zweckmäßigerweise wesentlich kompakteren Senderantwort bzw. Empfängerantwort, was eine demgegenüber deutliche Reduzierung an Datenübertragungs- und Rechenaufwand zur Folge hat. Dies gilt vor allem auch für eine permanente Überwachung des Datenübertragungssystems, die bislang typischerweise einen hohen Aufwand bezüglich beispielsweise Rechenleistung oder Datentransfer erforderte, was im Rahmen der vorliegenden Erfindung, insbesondere sofern die Überprüfung des Datenübertragungssystems stichprobenartig vorgesehen ist, überwunden wird.

Zweckmäßig können die Anfragenachricht, die Senderantwort sowie die Empfängerantwort über das ohnehin vorhandene Datenübertragungsmittel gesendet werden. Gleichermaßen ist denkbar, dass die Sendeeinrichtung und die Empfangseinrichtung über ein weiteres Datenübertragungsmittel mit der Überwachungseinrichtung verbunden sind.

Es kann vorgesehen sein, dass die Anfragenachricht verschlüsselt und/oder mit einer Authentifizierung von der Überwachungseinrichtung an die Sendeeinrichtung und/oder die Empfangseinrichtung gesendet wird, und/oder dass die Senderantwort und/oder die Empfängerantwort verschlüsselt und/oder mit einer Authentifizierung von der Sendeeinrichtung und/oder der Empfangseinrichtung an die Überwachungseinrichtung gesendet werden. Hierdurch kann bei der Übertragung der Anfragenachricht bzw. der Senderantwort bzw. der Empfängerantwort die jeweils sendende Einrichtung authentifiziert werden, wobei die empfangende Einrichtung die Authentifizierung entsprechend überprüfen kann und die Nachricht verwerfen kann, sofern die Authentifizierung fehlschlägt. Zudem kann vorgesehen sein, dass die Anfragenachricht bzw. die Senderantwort bzw. die Empfängerantwort verschlüsselt ist oder sind, wobei die empfangende Einrichtung die Nachricht entschlüsselt.

Hierdurch erfolgt eine weitere Steigerung der Sicherheit des Datenübertragungssystems, da durch die Authentifizierung und/oder die Verschlüsselung von Fremdgeräten und/oder von schadhafter Software generierte Nachrichten herausgefiltert und auch identifiziert werden können. Mit anderen Worten wird mithin durch die Verschlüsselung ein Empfang der Anfragenachricht von nicht authentifizierten Komponenten, die an dem Datenübertragungssystem angeschlossen sein könnten, verhindert, wodurch die Gefahr einer Manipulation verringert wird.

Im Rahmen des erfindungsgemäßen Verfahrens kann vorgesehen sein, dass das Datenübertragungssystem mehrere Sendeeinrichtungen und/oder Empfangseinrichtungen umfasst, wobei die Anfragenachricht als Broadcast an alle Sendeeinrichtungen und Empfangseinrichtungen des Datenübertragungssystems gesendet wird. Hierbei ist es also nicht erforderlich, dass zum Senden der Anfragenachricht durch die Überwachungseinrichtung explizit beispielsweise eine separate Datenübertragung zu ausgewählten Sendeeinrichtungen bzw. Empfangseinrichtungen etabliert werden muss, sondern die Anfragenachricht kann beispielsweise über das Datenübertragungsmittel schlicht an alle Sendeeinrichtungen bzw. Empfangseinrichtungen, die über das Datenübertragungsmittel miteinander verbunden sind, gesendet werden.

Die von Sendeeinrichtungen an die Empfangseinrichtungen über das Datenübertragungsmittel übertragenen Nachrichten können typischerweise einen jeweiligen Nachrichtentyp haben. Mit anderen Worten können über das Datenübertragungsmittel Nachrichten mit unterschiedlichen Nachrichtentypen übertragen werden. Nachrichtentypen können beispielsweise die Funktion der jeweiligen Nachricht beschreiben, wobei insbesondere Nachrichten eines bestimmten Nachrichtentyps nur von Teilen der Sendeeinrichtungen gesendet und nur von Teilen der Empfangseinrichtungen empfangen werden können. Häufig betrifft ein bestimmter Nachrichtentyp auch nur ein bestimmtes Paar aus jeweils einer Sendeeinrichtung und einer Empfangseinrichtung. Zudem ist häufig vorgesehen, dass bestimmte Sendeeinrichtungen bzw. Empfangseinrichtungen nur einen bestimmten Nachrichtentyp verarbeiten können. Außerdem ist denkbar, dass Nachrichten verschiedenen Nachrichtentyps auch durch dieselbe Sendeeinrichtung bzw. Empfangseinrichtung gesendet bzw. empfangen werden. Als Beispiel hierfür ist eine Steuerungseinrichtung zur Durchführung eines autonomen Betriebs des oder eines Kraftfahrzeugs denkbar, da die Steuerungseinrichtung Nachrichtentypen empfängt und sendet, die beispielsweise das Bremssystem, den Antrieb, die Lenkung etc., also mithin unterschiedliche Nachrichtentypen, betreffen.

Erfindungsgemäß kann vorgesehen sein, dass durch die Sendeeinrichtung oder die Sendeeinrichtungen Sendernachrichten mit unterschiedlichen Nachrichtentypen gesendet werden und durch die Empfangseinrichtung oder die Empfangseinrichtungen Empfängernachrichten mit unterschiedlichen Nachrichtentypen empfangen werden, wobei die Anfragenachricht wenigstens eine den Nachrichtentyp beschreibende Typinformation vorgibt, wobei von der Typinformation abhängt, von Sendernachrichten welchen Nachrichtentyps die Senderantwort anhängt und/oder von Empfängernachrichten welchen Nachrichtentyps die Empfängerantwort abhängt und/oder von welcher Sendeeinrichtung die Senderantwort generiert wird und/oder von welcher Empfangseinrichtung die Empfängerantwort generiert wird. Ein denkbarer Nachrichtentyp kann hierbei sein, dass die Nachrichten, anhand derer die Senderantwort bzw. die Empfängerantwort generiert werden, die Motorsteuerung betreffen. Ein anderer Nachrichtentyp kann beispielsweise sein, dass die Nachrichten, anhand derer die Senderantwort bzw. die Empfängerantwort generiert werden, ein Entertainmentsystem des Kraftfahrzeugs betreffen.

Nachrichtentypen können zusätzlich oder alternativ auch hinsichtlich der Kritikalität bzw. Priorität der jeweiligen Sender- bzw. Empfängernachrichten definiert werden. Beispielsweise können kritische Nachrichten, also mit anderen Worten Nachrichten mit einer vergleichsweise hohen Priorität, die Steuerung eines Sicherheitssystems oder eines Bremssystems des Kraftfahrzeugs betreffen, wohingegen unkritische Nachrichten beispielsweise die Klimaanlage oder Heizung des Kraftfahrzeugs betreffen können.

Der Nachrichtentyp kann zudem auch dadurch definiert sein, welche Sendeeinrichtung bzw. welche Empfängereinrichtung die Senderantwort bzw.

Empfängerantwort generiert. So ist es etwa denkbar, dass gewisse Nachrichtentypen ausschließlich von einer bestimmten Sendeeinrichtung bzw. Empfangseinrichtung gesendet bzw. empfangen werden. Ein Beispiel hierfür ist der Nachrichtentyp "Scheibenwischanlage", wobei ein Aktor eines Scheibenwischers des Kraftfahrzeugs eine Empfangseinrichtung darstellt, die ausschließlich Empfängernachrichten dieses Nachrichtentyps empfängt.

Es kann vorgesehen sein, dass für unterschiedliche Nachrichtentypen jeweils fest definierte Häufigkeitsfaktoren vorgesehen sein können. Der Häufigkeitsfaktor kann insbesondere angeben, wie häufig der jeweilige Nachrichtentyp durch die Überwachungseinrichtung überwacht werden soll oder, mit anderen Worten, wie groß ein, insbesondere durchschnittliches, Zeitintervall ist, das zwischen zwei Überprüfungsvorgängen des jeweiligen Nachrichtentyps liegt.

Als erläuterndes Beispiel hierzu ist es denkbar, dass dem Nachrichtentyp "Scheibenwischanlage" der Häufigkeitsfaktor 1 zugeordnet ist, wohingegen dem Nachrichtentyp "Bremssystem" der Häufigkeitsfaktor 10 zugeordnet ist. Dies bedeutet, dass die Überwachung von Sendernachrichten bzw. Empfängernachrichten, die das Bremssystem betreffen, zehn Mal so häufig erfolgt wie die Überwachung von Sendernachrichten bzw. Empfängernachrichten, die die Scheibenwischanlage des Kraftfahrzeugs betreffen.

Zweckmäßig ist hierbei insbesondere, wenn Nachrichtentypen betreffend Sendernachrichten bzw. Empfängernachrichten, die einer vergleichsweise wichtigen Fahrzeugfunktion, wie beispielsweise dem Bremssystem oder einem autonomen Fahrbetrieb des Kraftfahrzeugs zugeordnet sind, häufiger überwacht werden als Nachrichtentypen, die einer weniger relevanten Fahrzeugfunktionen, wie beispielsweise einem Infotainmentssystem, einer Innenbeleuchtung des Kraftfahrzeugs oder dergleichen, zugeordnet sind.

Erfindungsgemäß kann zudem vorgesehen sein, dass über das Datenübertragungsmittel Sendernachrichten mehrerer Sendeeinrichtungen und/oder Empfängernachrichten mehrerer Empfangseinrichtungen übertragbar sind, wobei die Sendeeinrichtungen und/oder Empfangseinrichtungen jeweils eine zugeordnete Netzwerkadresse aufweisen, wobei die Anfragenachricht wenigstens eine eine Netzwerkadresse beschreibende Adressinformation beinhaltet, wobei von der Adressinformation abhängt, von welchen Sendernachrichten die Senderantwort abhängt und/oder von welchen Empfängernachrichten die Empfängerantwort abhängt und/oder welche Sendeeinrichtung die Senderantwort generiert und/oder welche Empfangseinrichtung die Empfängerantwort generiert. Dem liegt der Grundgedanke zugrunde, dass die Auswahl der Sendeeinrichtung, die die Senderantwort generiert, bzw. der Empfangseinrichtung, die die Empfängerantwort generiert, nicht bzw. nicht nur anhand des oder eines Nachrichtentyps, sondern stattdessen konkret komponentenspezifisch erfolgt, wobei jeder Komponente, das heißt jeder Sendeeinrichtung bzw. Empfangseinrichtung, eine eigene Adresse zugeordnet ist. Eine direkte Auswahl einzelner Sendeeinrichtungen bzw. Empfangseinrichtungen wird hierdurch auf einfache Weise ermöglicht. Dies kann insbesondere dann vorteilhaft sein, wenn kein übergeordnetes Protokoll genutzt wird, im Rahmen dessen bestimmte Nachrichtentypen definiert werden, beispielsweise wenn direkt ein Ethernet überwacht werden soll.

Bezüglich der Anfragenachricht kann vorgesehen sein, dass diese eine Samplinganzahl beinhaltet, wobei die Anzahl der Sendernachrichten und Empfängernachrichten, anhand derer die Senderantwort und Empfängerantwort generiert wird, von der Samplinganzahl abhängt. Beispielsweise kann die Samplinganzahl 100 sein, was dazu führt, dass die Senderantwort anhand von 100 Sendernachrichten und die Empfängerantwort anhand von 100 Empfängernachrichten generiert wird.

Besonders bevorzugt kann vorgesehen sein, dass die Sendeeinrichtung mehrere Sendernachrichten nacheinander sendet, wobei die Senderantwort eine erste Senderinformation und eine zweite Senderinformation umfasst, wobei die zweite Senderinformation von wenigstens einer Sendernachricht abhängt, die nach allen Sendernachrichten, von denen die erste Senderinformation abhängt, gesendet wird und/oder dass die Empfangseinrichtung mehrere Empfängernachrichten nacheinander empfängt, wobei die Empfängerantwort eine erste Empfängerinformation und eine zweite Empfängerinformation umfasst, wobei die zweite Empfängerinformation von wenigstens einer Empfängernachricht abhängt, die nach allen Empfängernachrichten, von denen die erste Empfängerinformation abhängt, empfangen wird.

Dieses Prinzip soll, ohne Beschränkung der Allgemeinheit, anhand des nachfolgenden Beispiels erläutert werden. Beträgt die Samplingzahl beispielsweise 10, dann kann die erste Senderinformation von den ersten zehn Sendernachrichten abhängen, die nach dem Empfang der Anfragenachricht gesendet werden. Demgegenüber kann die zweite oder gegebenenfalls zusätzlich eine dritte Senderinformation von der zweiten bis elften oder von der dritten bis zwölften Sendernachricht abhängen, die nach dem Empfang der Anfragenachricht gesendet werden. Dieses Prinzip ist beliebig fortsetzbar. Für die erste, zweite sowie gegebenenfalls dritte Empfängerinformation gilt dies analog. Hierdurch kann das Problem gelöst werden, dass die Übertragung der Anfragenachricht zu der und/oder die Verarbeitung der Anfragenachricht in der Sendeeinrichtung und der Empfangseinrichtung unterschiedlich lange dauern könnte, wodurch unter Umständen die Sendernachrichten, anhand derer die Senderantwort generiert wird, nicht mehr den Empfängernachrichten, anhand derer die Empfängerantwort generiert wird, zugeordnet werden können und mithin die Auslösebedingung fälschlicherweise erfüllt ist.

So kann vorgesehen sein, dass zunächst die erste Senderinformation mit der ersten Empfängerinformation verglichen wird. Sollte dies zu keiner Übereinstimmung führen bzw. weisen diese Nachrichten keinen vorgegebenen Zusammenhang auf, dann muss dies nicht unbedingt bedeuten, dass ein die Erfüllung der Auslösebedingung rechtfertigender Grund vorliegt, sondern dass lediglich aufgrund der oben erläuterten Möglichkeit der unterschiedlich langen Übertragungs- bzw. Verarbeitungsdauer in der Sendeeinrichtung und der Empfangseinrichtung der ersten Empfängerinformation ein Satz von Nachrichten zugrunde liegt, der nicht dem der ersten Senderinformation zugrunde liegenden Satz von Nachrichten entspricht. Um dies zu überprüfen, kann sodann die erste Senderinformation mit der zweiten Empfängerinformation sowie die zweite Senderinformation mit der ersten Empfängerinformation verglichen werden. Erst wenn dann keine Übereinstimmung bzw. kein Vorliegen des vorgegebenen Zusammenhangs erkannt wird, kann die Auslösebedingung erfüllt sein.

Hierdurch kann jedoch gegebenenfalls nicht vermieden werden, dass die Auslösebedingung aufgrund eines vergleichsweise großen Unterschieds zwischen der Übertragungs- bzw. Verarbeitungsdauer in der Sendeeinrichtung und der Empfangseinrichtung fälschlicherweise erfüllt ist. Um dieses Problem zu lösen, kann, basierend auf dem eben erläuterten Prinzip, vorgesehen sein, dass die Sendernachricht weitere Senderinformationen und die Empfängernachricht weitere Empfängerinformationen umfassen, die entsprechend ausgewertet werden. Je größer die Anzahl vorgesehener Senderinformationen und Empfängerinformationen ist, desto größer kann der Unterschied zwischen der Übertragungs- bzw. Verarbeitungsdauer in der Sendeeinrichtung und der Empfangseinrichtung sein, ohne dass die Auslösebedingung fälschlicherweise erfüllt ist.

Es kann erfindungsgemäß vorgesehen sein, dass ein Zeitpunkt, zu dem die Überwachungseinrichtung die Anfragenachricht an die Sendeeinrichtung und die Empfangseinrichtung sendet, insbesondere der zeitliche Abstand zwischen zwei gesendeten Anfragenachrichten, und/oder die Samplinganzahl zufällig bestimmt wird. Besonders zweckmäßig ist es hierbei, wenn der zeitliche Abstand zwischen zwei gesendeten Anfragenachrichten aus einem vorgegebenen Zeitintervall zufällig ausgewählt wird. Dadurch wird erreicht, dass die Überwachungszyklen nicht in regelmäßigen Abständen erfolgen und mithin der Zeitpunkt, an dem eine Überwachung erfolgen wird, nicht vorhersagbar ist, wodurch eine mögliche Manipulation der Überwachung des Datenübertragungssystems erschwert wird.

Zudem kann bei dem erfindungsgemäßen Verfahren vorgesehen sein, dass die Sendeeinrichtung die Senderantwort bezüglich der Generierung der Senderantwort nach Verstreichen einer Wartezeit an die Überwachungseinrichtung sendet und/oder dass die Empfangseinrichtung die Empfängerantwort bezüglich der Generierung der Empfängerantwort nach Verstreichen einer Wartezeit an die Überwachungseinrichtung sendet. Hierbei kann die Wartezeit fest vorgegeben sein oder zufällig bestimmt werden. Obgleich auch vorgesehen sein kann, dass das Senden der Senderantwort und/oder der Empfängerantwort unmittelbar nach der Generierung der Senderantwort bzw. der Empfängerantwort erfolgt, wird durch die Zeitverzögerung ein Abfangen und eine Manipulation der Senderantwort und/oder der Empfängerantwort durch beispielsweise eine Schadsoftware erschwert. Vor allem wenn die Zeitverzögerung zufällig bestimmt wird, ist der Zeitpunkt des Sendens der Senderantwort und/oder der Empfängerantwort vorab nicht bestimmbar, womit diese Nachrichten schwieriger zu manipulieren sind.

Für den Fall, dass nach dem Senden der Anfragenachricht die Senderantwort und/oder Empfängerantwort ausbleibt, kann ein vorab definierter Timeout-Wert vorgesehen sein. Sofern nach dem Senden der Anfragenachricht eine durch den Timeout-Wert vorgegebene Zeitspanne verstrichen ist, ohne dass die Senderantwort und/oder Empfängerantwort bei der Überwachungseinrichtung angekommen ist, kann der jeweilige Überwachungsvorgang abgebrochen werden und es können gegebenenfalls weitere Maßnahmen, die insbesondere von dem jeweiligen Nachrichtentyp abhängen, eingeleitet werden. Eine weitere Maßnahme kann hierbei sein, dass die Anfragenachricht erneut gesendet wird und/oder dass eine Protokollierung des Ausbleibens erfolgt. Ein mögliches Ausbleiben der Senderantwort bzw. Empfängerantwort muss hierbei nicht unbedingt durch auf eine Fehlfunktion begründet sein, sondern kann stattdessen lediglich auf einen hohen Datentransfer oder dergleichen zurückzuführen sein.

Außerdem ist denkbar, dass die Senderantwort die Senderinformationen oder eine Senderinformation beinhaltet, deren Berechnung durch Anwenden einer kommutativen Operation auf zumindest Teile der Sendernachrichten, von denen die Senderantwort abhängt, oder auf Informationsfelder dieser Sendernachrichten erfolgt, und dass die Empfängerantwort die Empfängerinformationen oder eine Empfängerinformation beinhaltet, deren Berechnung durch Anwenden einer kommutativen Operation auf zumindest Teile der Empfängernachrichten, von denen die Empfängerantwort abhängt, oder auf Informationsfelder dieser Empfängernachrichten erfolgt, wobei die Auslösebedingung erfüllt ist, wenn die Senderinformation und die Empfängerinformation unterschiedlich sind oder keinen vorgegebenen Zusammenhang aufweisen oder wenn keine der Senderinformationen mit einer der Empfängerinformationen übereinstimmt oder einen vorgegebenen Zusammenhang aufweist. Die Informationsfelder können beispielsweise Prüfsummen der einzelnen Nachrichten, Inhaltsfelder oder dergleichen sein.

Es ist insbesondere denkbar, dass die Senderinformationen oder die Senderinformation bzw. die Empfängerinformationen oder die Empfängerinformation anhand des Prinzips der zyklischen Redundanzprüfung (CRC) generiert wird. Besonders zweckmäßig kann hierbei sein, dass die Senderinformationen bzw. die Empfängerinformation, die mithin eine Prüfsumme darstellen bzw. darstellt, modulo einer vorab definierten, natürlichen Zahl angegeben wird. Wird die natürliche Zahl ausreichend groß gewählt, so kann hierdurch vermieden werden, dass ein Unterschied zwischen der Senderinformation und der Empfängerinformation, der aufgrund eines zufälligen Übereinstimmens der Prüfsummen, das lediglich aufgrund der modulo-Berechnung entstanden ist, nicht erkannt wird. Als weitere Alternative hierzu ist denkbar, dass die Prüfsumme bzw. die Sender-/Empfängerinformation auf der Basis einer XOR-Verknüpfung generiert wird.

Durch Ermittlung der Senderinformation mit Hilfe einer kommutativen Operation wird vermieden, dass sich die Senderinformationen aufgrund einer geänderten Reihenfolge, mit der die Sendernachrichten gesendet werden, ändern. Gleichermaßen wird durch die Ermittlung der Empfängerinformation durch eine kommutative Operation vermieden, dass sich die Empfängerinformationen aufgrund einer geänderten Reihenfolge, mit der die Empfängernachrichten empfangen werden, ändern.

Es ist es auch denkbar, dass anstelle der Prüfsumme ein Prüfwert verwendet wird, der auf der Grundlage nicht kommutativer Operationen, insbesondere unter Verwendung wenigstens einer S-Box, generiert wird. Zudem ist denkbar, dass auch ein anderer für einen derartigen Vergleich geeigneter, von den Sendernachrichten bzw. Empfängernachrichten abhängender Prüfwert oder gegebenenfalls sogar die gesamten Sendernachrichten bzw. Empfängernachrichten genutzt werden. Eine weitere Möglichkeit zur Ermittlung der Senderinformation bzw. der Empfängerinformation ist die Berechnung eines Hashwertes aus den genannten Eingangsgrößen.

Bei Erfüllung der Auslösebedingung kann vorgesehen sein, dass eine Protokollierung einer das überwachungsrelevante Ereignis beschreibenden Ereignisinformation und/oder eine Übertragung der Ereignisinformation an eine fahrzeugexterne Einrichtung und/oder die Ausgabe eines Warnsignals an einen Nutzer, insbesondere einen Fahrer eines Kraftfahrzeugs, das das Datenübertragungsmittel umfasst, und/oder eine Außerbetriebnahme und/oder Modifikation einer von dem überwachungsrelevanten Ereignis betroffenen Funktion, insbesondere einer Fahrzeugfunktion des Kraftfahrzeugs, erfolgt. Durch die Protokollierung wird es ermöglicht, dass beispielsweise bei der nächsten Wartung des Kraftfahrzeugs ein Auslesen der Protokollierung erfolgen kann, sodass ein Auswertender die überwachungsrelevanten Ereignisse beurteilten und über gegebenenfalls notwendige Maßnahmen entscheiden und diese einleiten kann. Eine Protokollierung kann durch ein beliebiges Steuergerät des Kraftfahrzeugs erfolgen. Um eine Informationsbereitstellung an Dritte, beispielsweise den Fahrzeughersteller, bereits vor der nächsten Wartung zu ermöglichen, kann die Ereignisinformation auch, insbesondere drahtlos, an eine fahrzeugexterne Einrichtung, beispielsweise einen Backendserver, übertragen und dort weiterverarbeitet werden. Die Reaktion, die bei Erfüllung der Auslösebedingung vorgesehen sein kann, kann insbesondere auch von dem Nachrichtentypen abhängen.

Die Ausgabe des Warnsignals an den Nutzer kann insbesondere dann sinnvoll sein, wenn das überwachungsrelevante Ereignis anzeigt, dass ein zuverlässiger Betrieb des Kraftfahrzeugs nicht mehr gewährleistet ist. Der Nutzer kann dadurch zum Anhalten bzw. Stoppen der Fahrt aufgefordert werden. Gleichermaßen kann jedoch auch in weniger drastischen Fällen, beispielsweise wenn eine Heizung des Kraftfahrzeugs oder dergleichen außer Betrieb genommen werden muss, dem Fahrer ein entsprechendes Warnsignal gegeben werden. Eine derartige Außerbetriebnahme sollte vorzugsweise nur dann erfolgen, wenn die betroffene Funktion nicht fahrt- bzw. sicherheitsrelevant ist. Statt einer vollständigen Außerbetriebnahme einer Funktion kann diese auch modifiziert, z.B. anders parametrisiert, zur Verfügung gestellt werden. Es kann somit ein abgesicherter bzw. eingeschränkter Modus bereitgestellt werden, in dem eine Funktion nur eingeschränkt zur Verfügung steht, wodurch beispielsweise eine Auswirkung einer Fehlfunktion einer bestimmten Komponente reduziert sein kann.

Bei dem erfindungsgemäßen Verfahren kann vorgesehen sein, dass das Datenübertragungsmittel verschiedene Busse und/oder Netzwerke umfasst und/oder dass als Datenübertragungsmittel oder als Teil des Datenübertragungsmittels ein CAN-Bus und/oder ein CAN FD-Bus und/oder ein LIN-Bus und/oder ein FlexRay-Bus und/oder ein I2C-Bus und/oder ein Uart-Bus und/oder ein PCIe-Bus und/oder ein SPI-Bus und/oder ein Ethernet verwendet wird oder werden. Ergänzend oder alternativ können auch andere Busse und/oder Netzwerke als Datenübertragungsmittel oder als Teil hiervon verwendet werden. Werden verschiedene Busse und/oder Netzwerke als Teil des Datenübertragungsmittels genutzt, so können Nachrichten eines busübergreifenden Protokolls, z.B. auf Basis von ISO-TP, überwacht werden, also insbesondere als Sender- bzw. Empfängernachrichten berücksichtigt werden. Auch die weitere Kommunikation, also das Senden der Anfragenachricht und/oder der Sender- und/oder Empfängerantwort kann über das busübergreifende Protokoll erfolgen. Prinzipiell wäre es auch möglich, Nachrichten des jeweiligen einzelnen Busses oder Netzwerks als Sender- und Empfängernachrichten zu berücksichtigen, jedoch die Anfragenachricht und/oder die Sender- und/oder Empfängerantwort über das busübergreifende Protokoll zu senden. Das Erfindungsgemäße Verfahren kann bedarfsgerecht auf verschiedenen Ebenen des OSI-Schichtenmodells implementiert werden.

Bei einer Überwachung eines Netzwerks, z.B. eines Ethernet, kann die Anfragenachricht eine Adressinformation beinhaltet, von der abhängt, welche Sendeeinrichtung die Senderantwort generiert und/oder welche Empfangseinrichtung die Empfangsantwort generiert. Die Adressinformation kann insbesondere das Sendeeinrichtungs-Empfangseinrichtungs-Paar betreffen, dessen Kommunikation überwacht werden soll. Die grundlegenden Prinzipien der genannten Busse und Netzwerke sind dem Fachmann gemeinhin geläufig und sollen daher nicht erläutert werden.

Das Verfahren kann auf unterschiedlichen Schichten des OSI-Schichtenmodells implementiert sein. Je nach Schicht, in der die Implementierung erfolgt, können einzelne Schritte des Verfahrens in einer jeweiligen Hardwarekomponente oder Softwarekomponente, die die entsprechende Schicht implementiert, implementiert sein. Bei einer Implementierung auf einer bestimmten OSI-Schicht kann abhängig von dem zur Implementierung der jeweiligen Schicht oder von mehreren der Schichten genutzten Protokoll durch die Anfragenachricht auf unterschiedliche Strukturdaten der Protokolle zurückgreifen werden. Beispielsweise können Adressinformationen, Nachrichten IDs, oder Dateninhalte der Nachrichten, beispielsweise ein Counter bei einer busübergreifender Kommunikation, bei der Auswahl der zu berücksichtigenden Nachrichten berücksichtigt werden. Die Berechnung der Antwortnachricht kann z.B. auf Prüfsummen, Hashwerten und/oder Dateninhalten der Nachrichten basieren, wobei die bei der Berechnung genutzten Eingangsdaten insbesondere abhängig von der OSI-Schicht sind, auf der die Überwachung implementiert ist.

Im Rahmen einer Softwarelösung kann vorgesehen sein, dass ein Überwachungsmodul zur Generierung der Senderantwort bzw. der Empfängerantwort in der Software der Sendeeinrichtung bzw. der Empfangseinrichtung, insbesondere in einem jeweiligen Steuergerät, implementiert ist. Da eingehende bzw. ausgehende Nachrichten typischerweise zunächst gepuffert werden und dadurch beispielsweise aufgrund unterschiedlicher Nachrichtenprioriäten und einer hohen Buslast eine Veränderung der Reihenfolge der Nachrichten möglich ist, ist es besonders zweckmäßig, wenn die Senderinformation durch eine kommutative Operation ermittelte wird, da hierbei die Senderinformation nicht von der Reihenfolge der Senderantworten abhängt. Dies gilt analog für die Empfängerinformation.

Dagegen kann im Rahmen einer Hardwarelösung vorgesehen sein, dass das Überwachungsmodul in der Hardware der Sendeeinrichtung bzw. der Empfangseinrichtung implementiert ist. Insbesondere wenn ein CAN-Bus als Datenübertragungsmittel verwendet wird, kann das Überwachungsmodul in einer CAN-Kontrolleinheit der Sendeeinrichtung bzw. Empfangseinrichtung, die insbesondere eine anwendungsspezifische integrierte Schaltung (ASIC) ist, implementiert sein. Hierbei ergibt sich das im Rahmen der Softwarelösung erläuterte Problem bezüglich der Veränderung der Reihenfolge der ein- bzw. ausgehenden Nachrichten nicht, da hierbei die Senderantwort bzw. Empfängerantwort anhand von Nachrichten generiert wird, die gemäß der tatsächlichen Reihenfolge, mit der sie gesendet bzw. empfangen werden, von dem Überwachungsmodul erfasst werden. Das Überwachungsmodul kann im Rahmen der Hardwarelösung gleichermaßen in einem Transceiver der Sendeeinrichtung bzw. Empfangseinrichtung implementiert sein.

Die Erfindung betrifft zudem ein Datenübertragungssystem umfassend wenigstens eine Sendeeinrichtung zum Senden von Nachrichten, wenigstens eine Empfangseinrichtung zum Empfangen der Nachrichten, ein Datenübertragungsmittel zur Übertragung der Nachrichten und eine Überwachungseinrichtung, wobei das Datenübertragungsmittel insbesondere ein Fahrzeugbus oder ein fahrzeugseitiges Netzwerk eines Kraftfahrzeugs ist, wobei das Datenübertragungssystem zur Durchführung des Verfahrens nach einem der vorangehenden Ansprüche eingerichtet ist.

Die für das erfindungsgemäße Verfahren beschriebenen Merkmale sind entsprechend mit den genannten Vorteilen auf das erfindungsgemäße Datenübertragungssystem übertragbar.

Die Erfindung betrifft zudem ein Kraftfahrzeug umfassend das oben beschriebene Datenübertragungssystem, wobei die für das erfindungsgemäße Verfahren bzw. Datenübertragungssystem beschriebenen Merkmale entsprechend mit den genannten Vorteilen auf das erfindungsgemäße Kraftfahrzeug übertragbar sind.

Weitere Vorteile und Einzelheiten der Erfindung ergeben sich aus den im folgenden beschriebenen Ausführungsbeispiel sowie anhand der Zeichnungen. Dabei zeigen schematisch:
- Fig. 1: ein Ausführungsbeispiel eines erfindungsgemäßen Kraftfahrzeugs,
- Fig. 2: ein Flussdiagramm eines Ausführungsbeispiels des erfindungsgemäßen Verfahrens, und
- Fig. 3: ein Ausschnitt des Kraftfahrzeugs aus Fig. 1 mit einer Detaildarstellung einer Empfangseinrichtung.

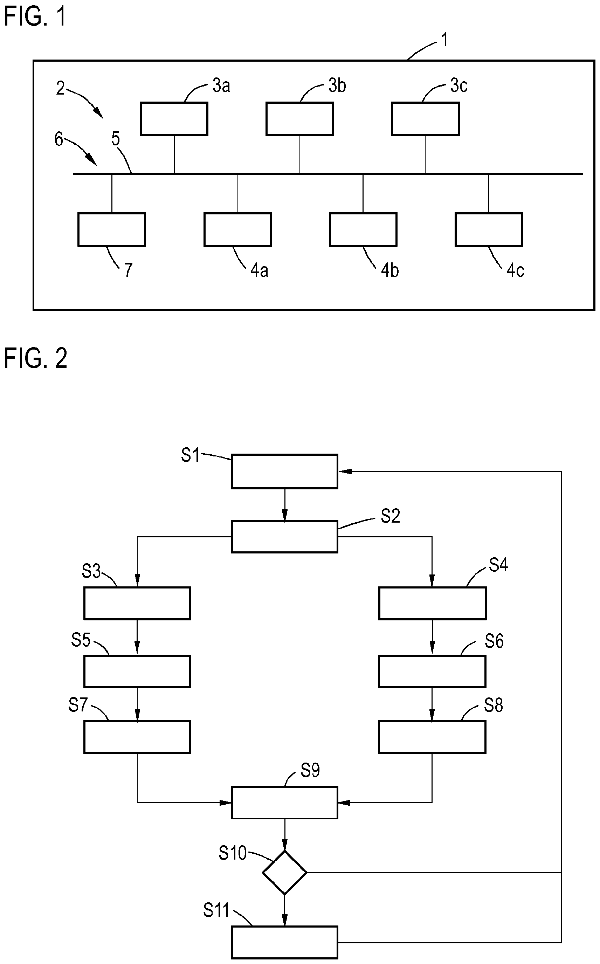

Fig. 1 zeigt schematisch ein Kraftfahrzeug 1 umfassend ein Datenübertragungssystem 2 mit drei Sendeeinrichtungen 3a, 3b, 3c sowie drei Empfangseinrichtungen 4a, 4b, 4c. Die Anzahl der Sendeeinrichtungen 3a, 3b, 3c sowie der Empfangseinrichtungen 4a, 4b, 4c ist lediglich exemplarisch und kann selbstverständlich hiervon abweichen. Ferner ist ein beispielsweise als Fahrzeugbus 5 ausgebildetes Datenübertragungsmittel 6 des Datenübertragungssystems 2 vorgesehen, wobei der Fahrzeugbus 5 beispielsweise ein CAN-Bus, ein LIN-Bus oder ein PCIe-Bus sein kann. Die genannten Busse sind rein beispielhaft. Wie erläutert können auch andere Busse, Netzwerke oder Daten-übertragungssysteme, die verschiedene Busse und/oder Netzwerke umfassen, überwacht werden. Über den Fahrzeugbus 5 werden von den Sendeeinrichtungen 3a, 3b, 3c gesendete Nachrichten an die Empfangseinrichtungen 4a, 4b, 4c übertragen. Obgleich die Sendeeinrichtungen 3a, 3b, 3c und die Empfangseinrichtungen 4a, 4b, 4c beim gezeigten Ausführungsbeispiel lediglich zum Senden oder Empfangen von Nachrichten vorgesehen sind, ist gleichermaßen denkbar, dass wenigstens eine mit dem Fahrzeugbus 5 verbundene Komponente sowohl als Sendeeinrichtung als auch als Empfangseinrichtung fungiert. Das als Fahrzeugbus 5 vorgesehene Datenübertragungsmittel 6 kann gleichermaßen ein geeignetes Netzwerk sein, insbesondere ein Ethernet. Zudem umfasst das Datenübertragungssystem 2 eine Überwachungseinrichtung 7 zur Überwachung des Datenübertragungssystems 2, das exemplarisch an dem Fahrzeugbus 5 angeschlossen ist.

Typischerweise können die über den Fahrzeugbus 5 übertragenen Sendernachrichten und Empfängernachrichten Nachrichten eines jeweiligen Nachrichtentyps sein. Vorzugsweise werden Nachrichten verschiedenen Nachrichtentyps über den gleichen Fahrzeugbus 5 übertragen. Nachrichtentypen können beispielsweise die Funktion der jeweiligen Nachricht betreffen. So kann ein Nachrichtentyp exemplarisch angeben, dass die Sendernachrichten bzw. Empfängernachrichten zur Steuerung einer Scheibenwischanlage vorgesehen sind.

Aus diesem Beispiel wird insbesondere deutlich, dass Nachrichten eines bestimmten Nachrichtentyps gegebenenfalls nur von Teilen der Sendeeinrichtungen 3a, 3b, 3c gesendet und von Teilen der Empfangseinrichtungen 4a, 4b, 4c empfangen werden können, wobei im Extremfall ein bestimmter Nachrichtentyp nur ein bestimmtes Paar aus jeweils einer der Sendeeinrichtungen 3a, 3b, 3c und einer der Empfangseinrichtungen 4a, 4b, 4c betrifft. Gleichermaßen können Nachrichten verschiedenen Nachrichtentyps auch durch dieselbe Sendeeinrichtung 3a, 3b, 3c bzw. Empfangseinrichtung 4a, 4b, 4c gesendet bzw. empfangen werden.

Der Zweck der vorliegenden Erfindung ist es, eine, insbesondere stichprobenartige, Überwachung der über das Datenübertragungssystem 2 übertragenen Nachrichten, insbesondere hinsichtlich möglicher Schadsoftware oder durch im Datenübertragungssystem 2 verbaute Fremdgeräte verursachte Fehlerquellen, auf eine möglichst einfache und aufwandsarme Art und Weise zu ermöglichen. Hierfür sendet die Überwachungseinrichtung 7 eine exemplarisch als Broadcast gesendete Anfragenachricht an die Sendeeinrichtungen 3a, 3b, 3c und die Empfangseinrichtungen 4a, 4b, 4c.

Hierbei umfasst die Anfragenachricht beispielsweise eine Typinformation, die den Nachrichtentyp der von den Sendeeinrichtungen 3a, 3b, 3c über den Fahrzeugbus 5 gesendeten Sendernachrichten bzw. der von den Empfangseinrichtungen 4a, 4b, 4c über den Fahrzeugbus 5 empfangenen Empfängernachrichten betrifft. Insbesondere für den Fall, dass das Datenübertragungsmittel 6 ein Netzwerk, beispielsweise ein Ethernet, ist, können die Sendeeinrichtungen 3a, 3b, 3c und/oder die Empfangseinrichtungen 4a, 4b, 4c jeweils eine zugeordnete Netzwerkadresse aufweisen, wobei die Anfragenachricht alternativ oder zusätzlich zu der Typinformation eine die Netzwerkadresse beschreibende Adressinformation umfasst. Von der Typinformation bzw. der Adressinformation hängt ab, welche der Sendeeinrichtungen 3a, 3b, 3c eine Senderantwort und welche der Empfangseinrichtung 4a, 4b, 4c eine Empfängerantwort generiert, also von der Anfragenachricht betroffen ist. Insbesondere können von der Anfragenachricht nur jene Sendeeinrichtungen 3a, 3b, 3c bzw. Empfangseinrichtungen 4a, 4b, 4c betroffen sein, die Nachrichtentypen, die der Typinformation entsprechen, senden bzw. empfangen und/oder die eine der Adressinformation entsprechende Netzwerkadresse aufweisen. Nicht betroffene Einrichtungen können die Anfragenachricht unmittelbar verwerfen. Dies kann bereits durch einen Bus- bzw. Netzwerkcontroller oder durch eine nachgelagerte Teileinrichtung, insbesondere im Rahmen einer Softwarelösung erfolgen. Die Senderantwort hängt hierbei von der Anfragenachricht und von wenigstens einer Sendernachricht ab, die von der von der Anfragenachricht betroffenen Sendeeinrichtung 3a, 3b, 3c über den Fahrzeugbus 5 gesendet wird, wie später noch genauer erläutert werden wird. Analog hängt die Empfängerantwort von der Anfragenachricht und von wenigstens einer Empfängernachricht ab, die von der von der Anfragenachricht betroffenen Empfangseinrichtung 4a, 4b, 4c über den Fahrzeugbus 5 empfangen wird.

Die Senderantwort sowie die Empfängerantwort werden an die Überwachungseinrichtung 7 gesendet, wobei die Überwachungseinrichtung 7 die Erfüllung einer von der Senderantwort und der Empfängerantwort abhängenden Auslösebedingung überprüft, deren Erfüllung ein überwachungsrelevantes Ereignis anzeigt. Die Empfängernachrichten, von denen die Empfängerantwort abhängt, sind hierbei zweckmäßig so gewählt, dass sie bei einem erwartungskonformen Betrieb des Datenübertragungssystems 2 den Sendernachrichten, von denen die Senderantwort abhängt, entsprechen bzw. dass ein bekannter Zusammenhang zwischen diesen Nachrichten besteht. Folglich kann die Senderantwort und die Empfängerantwort im Rahmen einer Auswertung genutzt werden, um eine Diskrepanz zwischen den Sendernachrichten und den Empfängernachrichten zu detektieren. Eine derartige Diskrepanz kann beispielsweise auf eine Schadsoftware oder eine Fehlfunktion im Datenübertragungssystem 2 oder auf ein Fremdgerät, das im Datenübertragungssystem 2 verbaut ist, zurückzuführen sein, was ein überwachungsrelevantes Ereignis darstellt. Die Auslösebedingung ist insbesondere dann erfüllt, wenn erkannt wird, dass die Sendernachrichten nicht oder verfälscht bei der Empfangseinrichtung 4a, 4b, 4c ankommen oder dass eine Empfängernachricht von der Empfangseinrichtung 4a, 4b, 4c empfangen wurde, die keiner der von der Sendeeinrichtung 3a, 3b, 3c gesendeten Sendernachrichten entspricht.

Hieraus ergibt sich insbesondere der Vorteil, dass zur Detektion des überwachungsrelevanten Ereignisses nicht der komplette Satz an Sendernachrichten mit dem kompletten Satz an Empfängernachrichten, sondern nur die hieraus generierte Senderantwort mit der Empfängerantwort verglichen werden muss. Mit anderen Worten ist durch den Vergleich der Senderantwort mit der Empfängerantwort ein Vergleich zwischen dem, was von der Sendeeinrichtung 3a, 3b, 3c gesendet und dem, was von der Empfangseinrichtung 4a, 4b, 4c empfangen wurde, auf eine einfache und aufwandsarme Art und Weise ermöglicht. Dies resultiert in einer für diesen Zweck vergleichsweise kompakte Kommunikation, da zur Überprüfung lediglich ein Austausch der Senderantwort und Empfängerantwort erforderlich ist.

Anhand des in der Fig. 2 dargestellten Flussdiagramms wird das eben erläuterte Verfahren unter konkreter Bezugnahme auf das in Fig. 1 gezeigte Kraftfahrzeug 1 insbesondere hinsichtlich optionaler Details, jedoch ohne Beschränkung der Allgemeinheit, weiter vertieft. In einem Schritt S1 ist zunächst vorgesehen, dass die Überwachungseinrichtung 7 die Anfragenachricht generiert, die, wie bereits erläutert, exemplarisch eine Typinformation bzw. eine Adressinformation umfasst.

Für die Anfragenachricht ist zudem vorgesehen, dass diese exemplarisch eine Samplinganzahl beinhaltet, wobei die Anzahl der Sendernachrichten und Empfängernachrichten, von denen die Senderantwort und Empfängerantwort abhängt, von der Samplinganzahl abhängt. Vorteilhafterweise wird die Samplinganzahl zufällig bestimmt bzw. generiert. Wird beispielsweise zufällig die Samplinganzahl 126 generiert, so bedeutet dies, dass jeweils 126 Sendernachrichten sowie Empfängernachrichten zur Generierung der Senderantwort bzw. Empfängerantwort herangezogen werden. Durch die zufällige Auswahl der Samplinganzahl wird es einer im Datenübertragungssystem 2 möglicherweise vorhandenen Schadsoftware erschwert, die hier vorgeschlagene Überwachung zu manipulieren.

In dem Schritt S2 verschlüsselt die Überwachungseinrichtung 7 die Anfragennachricht und versieht diese mit einer Authentifizierung. Dies bewirkt einerseits, dass ein ungewollter Zugriff auf die Anfragennachricht von außen oder durch eine im Datenübertragungssystem 2 verbaute Fremdkomponente erschwert wird, und dass andererseits Komponenten 3a, 3b, 3c, 4a, 4b, 4c, die die Anfragenachricht empfangen, anhand der Authentifizierung sicherstellen können, dass die Anfragenachricht auch tatsächlich von der Überwachungseinrichtung 7 stammt und nicht von einer möglicherweise im Datenübertragungssystem 2 vorhandenen Schadsoftware generiert wurde.

Bei dem vorliegenden Ausführungsbeispiel wird im Schritt S2 die Anfragenachricht exemplarisch als Broadcast an alle Sendeeinrichtungen 3a, 3b, 3c und Empfangseinrichtungen 4a, 4b, 4c des Datenübertragungssystems 2 gesendet. Gleichermaßen kann hierbei jedoch vorgesehen sein, dass die Überwachungseinrichtung 7 die Anfragenachricht lediglich an ausgewählte Komponenten 3a, 3b, 3c, 4a, 4b, 4c des Datenübertragungssystems 2 sendet. Der Zeitpunkt, an dem die Überwachungseinrichtung 7 die Anfragenachricht an die Sendeeinrichtungen 3a, 3b, 3c und die Empfangseinrichtungen 4a, 4b, 4c sendet, wird zufällig bestimmt. Genauer gesagt wird der zeitliche Abstand, zwischen zwei aufeinanderfolgenden Anfragenachrichten, die durch die Überwachungseinrichtung 7 gesendet werden, zufällig bestimmt.

Jede der Sendeeinrichtungen 3a, 3b, 3c entschlüsselt im Schritt S3 die Anfragenachricht und jede der Empfangseinrichtungen 4a, 4b, 4c entschlüsselt im Schritt S4 die Anfragenachricht, wobei anschließend in Anhängigkeit der Typinformation die Anfragenachricht entweder verworfen wird, also die jeweilige Sende- bzw. Empfangseinrichtung für die aktuell empfangene Anfragenachricht keine Sender- bzw. Empfängerantwort generiert, oder das beschriebene Verfahren weiter fortgesetzt wird. Nach Empfang der Anfragenachricht kann optional eine Bestätigung an die Überwachungseinrichtung gesendet werden. Zusätzlich kann zudem eine der Anfragenachricht beigefügte Authentifizierung von den Sendeeinrichtungen 3a, 3b, 3c und den Empfangseinrichtungen 4a, 4b, 4c geprüft werden. Ohne Beschränkung der Allgemeinheit wird im Folgenden angenommen, dass lediglich die Sendeeinrichtung 3a sowie die Empfangseinrichtung 4a das Verfahren weiter fortsetzen, da beispielsweise nur diese Komponenten 3a, 4a Nachrichten der in der Anfragenachricht enthaltenen Typinformation senden bzw. empfangen. Demgegenüber verwerfen die Sendeeinrichtungen 3b, 3c sowie die Empfangseinrichtungen 4b, 4c die Anfragenachricht und beenden das Verfahren an dieser Stelle. Gleichermaßen ist denkbar, dass nicht nur jeweils eine der Sendeeinrichtungen 3a, 3b, 3c sowie Empfangseinrichtungen 4a, 4b, 4c, sondern zwei oder mehrere davon das erfindungsgemäße Verfahren fortsetzen.

Im Schritt S5 generiert die Sendeeinrichtung 3a die Senderantwort, die eine erste Senderinformation und eine zweite Senderinformation umfasst. Die erste und zweite Senderinformation hängen von voneinander verschiedenen Teilmengen der Sendernachrichten ab. Zur Erläuterung der ersten Senderinformation und der zweiten Senderinformation sei exemplarisch angenommen, dass die Samplinganzahl 126 beträgt, wobei hierfür selbstverständlich jeder beliebige anderer geeigneter Zahlenwert denkbar ist. Nach dem Empfangen der Anfragenachricht sendet die Sendeeinrichtung 3a nacheinander mehrere Sendernachrichten. Die erste Senderinformation wird anhand der von der Sendeeinrichtung 3a gesendeten Sendernachrichten, die nach dem Empfang der Anfragenachricht gesendet werden, generiert. Hierbei werden die ersten 126 Sendernachrichten nach dem Empfang der Anfragenachricht genutzt. Exemplarisch ist für die zweite Senderinformation vorgesehen, dass diese anhand der zweiten bis zur 127ten der von der Sendeeinrichtung nach dem Empfang der Anfragenachricht gesendeten Sendernachricht generiert wird.

Nach demselben Prinzip generiert die Empfangseinrichtung 4a im Schritt S6 die Empfängerantwort, die gleichermaßen eine erste Empfängerinformation und eine zweite Empfängerinformation umfasst.

Hierbei wird das Problem gelöst, dass die Übertragung der Anfragenachricht an die Sendeeinrichtung 3a und an die Empfangseinrichtung 4a und/oder die jeweilige Verarbeitung der Anfragenachricht jeweils unterschiedlich lange dauern kann, wodurch die Senderantwort und die Empfängerantwort auf einem unterschiedlichen, insgesamt bezüglich der Reihenfolge des Sendens bzw. Empfangens dieser Nachrichten verschobenen, Nachrichtensatz basieren könnte, was im Laufe des weiteren Verfahrens zu einer fälschlicherweise erfüllten Auslösebedingung führen könnte. Details hierzu werden weiter unten genauer erläutert.

Grundsätzlich ist hierbei auch denkbar, dass eine dritte Senderinformation der Senderantwort vorgesehen ist, die von der dritten bis zur 128ten der von der Sendeeinrichtung nach Empfang der Anfragenachricht gesendeten Sendernachrichten abhängen. Weitere Senderinformationen sind nach diesem Prinzip denkbar. Analog hierzu sind dritte bzw. weitere Empfängerinformationen der Empfängerantwort gleichermaßen denkbar.

Die beiden Senderinformationen der Senderantwort werden durch eine kommutative Operation aus den jeweiligen Sendernachrichten, vorzugsweise aus einzelnen Informationsfeldern der Nachrichten, z.B. aus Prüfsummen der jeweiligen Nachrichten, ermittelt, anhand derer die Senderantwort bzw. die jeweilige Senderinformation generiert wird. Gleichermaßen werden auch die beiden Empfängerinformationen der Empfängerantwort durch eine kommutative Operation aus den jeweiligen Empfängernachrichten, anhand derer die Empfängerantwort bzw. die jeweilige Empfängerinformation generiert wird bzw. aus deren Informationsfeldern, ermittelt. Konkret stellen die erste Senderinformation, die zweite Senderinformation, die erste Empfängerinformation und die zweite Empfängerinformation jeweils eine Prüfsumme dar, die exemplarisch anhand des Prinzips der Redundanzprüfung (CRC) generiert wird.

In einem Schritt S7 verschlüsselt die Sendeeinrichtung 3a die Senderantwort, versieht diese mit einer Authentifizierung und sendet diese an die Überwachungseinrichtung 7. Gleichermaßen verschlüsselt in einem Schritt S8 die Empfangseinrichtung 4a die Empfängerantwort, versieht diese mit einer Authentifizierung und sendet diese an die Überwachungseinrichtung 7. Die Schritte S7 und S8 erfolgen nicht zwangsläufig unmittelbar nach der Generierung der Senderantwort bzw. Empfängerantwort, sondern bevorzugt zeitverzögert. Beispielhaft wird die Zeitverzögerung zufällig bestimmt, was eine Manipulation der Überwachung weiter erschwert. Für die zufällige Zeitverzögerung kann ein Maximum vorgegeben sein, das insbesondere sowohl in der Sende- bzw. Empfangseinrichtung 3a, 4a als auch in der Überwachungseinrichtung 7 bekannt ist. Dies ermöglicht es, die zufällige Zeitverzögerung mit einem Timeout für die Antwort zu kombinieren, der später noch erläutert wird.

In einem Schritt S9 wird die Authentifizierung der Senderantwort und der Empfängerantwort durch die Überwachungseinrichtung 7 überprüft und die Senderantwort und die Empfängerantwort werden, sofern die Authentifizierung erfolgreich verläuft, von der Überwachungseinrichtung 7 entschlüsselt.

In einem Schritt S10 überprüft die Überwachungseinrichtung 7 eine von der Senderantwort und der Empfängerantwort abhängende Auslösebedingung, deren Erfüllung ein überwachungsrelevantes Ereignis anzeigt. Hierbei wird zunächst überprüft, ob die erste Senderinformation mit der ersten Empfängerinformation übereinstimmt bzw. ob ein vorgegebener Zusammenhang zwischen diesen Informationen besteht. Ist dies der Fall, dann ist die Auslösebedingung nicht erfüllt und das Verfahren kann beendet bzw. im Schritt S1 fortgesetzt werden.

Ist dies nicht der Fall, dann könnte, wie weiter oben beschrieben, diese Diskrepanz nicht unbedingt durch ein überwachungsrelevantes Ereignis verursacht worden sein, sondern es könnte beispielsweise die Übertragung der Anfragenachricht an die Sendeeinrichtung 3a länger gebraucht haben als die Übertragung der Anfragenachricht an die Empfangseinrichtung 4a. Dies hat zufolge, dass die Generierung der Empfängerantwort durch die Empfangseinrichtung 4a früher begann als die Generierung der Senderantwort durch die Sendeeinrichtung 3a. Dieser zeitliche Unterschied kann dazu führen, dass die Empfängerantwort auf einen um eine Nachricht verschobenen Satz von Empfängernachrichten in Bezug auf den Satz von Sendernachrichten, anhand derer die erste Senderinformation generiert wird, bezogen ist. Ist dies der Fall, dann stimmt jedoch die zweite Empfängerinformation mit der ersten Senderinformation überein. Um dies zu erkennen wird, sofern die erste Senderinformation nicht mit der ersten Empfängerinformation übereinstimmt bzw. den vorgegebenen Zusammenhang nicht aufweist, anschließend die erste Senderinformation mit der zweiten Empfängerinformation und die zweite Senderinformation mit der ersten Empfängerinformation verglichen. Die Auslösebedingung ist dann erfüllt, wenn keine der Senderinformationen mit einer der Empfängerinformationen übereinstimmt bzw. den vorgegebenen Zusammenhang aufweist, da nur dann von einem überwachungsrelevanten Ereignis, wie beispielsweise, dass Sendernachrichten durch Schadsoftware manipuliert wurden oder die Empfängernachricht durch Fremdgeräte generiert wurden, ausgegangen werden kann.

Zusammengefasst kann ist die Auslösebedingung z.B. nur dann erfüllt sein, wenn die erste Senderinformation nicht mit der ersten Empfängerinformation übereinstimmt bzw. keinen vorgegebenen Zusammenhang aufweist, wenn die erste Senderinformation nicht mit der zweiten Empfängerinformation übereinstimmt bzw. keinen vorgegebenen Zusammenhang aufweist, wenn die zweite Senderinformation nicht mit der ersten Empfängerinformation übereinstimmt bzw. keinen vorgegebenen Zusammenhang aufweist und wenn die zweite Senderinformation nicht mit der zweiten Empfängerinformation übereinstimmt bzw. keinen vorgegebenen Zusammenhang aufweist. Ist dies der Fall, so ist in einem Schritt S11 vorgesehen, dass als Maßnahme beispielsweise eine Protokollierung einer das überwachungsrelevante Ereignis beschreibenden Ereignisinformation erfolgt. Bei einer Wartung des Kraftfahrzeugs 1 kann dieses Protokoll entsprechend ausgelesen werden. Alternativ oder ergänzend zur Protokollierung im Kraftfahrzeug kann die Ereignisinformation an eine fahrzeugexterne Einrichtung, beispielsweise einen Backendserver des Fahrzeugherstellers, übertragen werden. Als Maßnahme kann alternativ insbesondere vorgesehen sein, dass bei Erfüllung der Auslösebedingung ein Warnsignal an einen Nutzer bzw. Fahrer des Kraftfahrzeugs 1 ausgegeben wird, und, sofern eine nicht fahrt- bzw. sicherheitsrelevante Funktion des Kraftfahrzeugs 1 betroffen ist, die von dem überwachungsrelevanten Ereignis betroffene Funktion außer Betrieb genommen wird. Alternativ zur vollständigen Außerbetriebnahme einer Funktion könnte die Funktion, beispielsweise durch eine angepasste Parametrisierung, in einem abgesicherten bzw. eingeschränktem Modus bereitgestellt werden. Erfolgt eine Überwachung für unterschiedliche Nachrichtentypen, kann die bei Erfüllung der Auslösebedingung ergriffene Maßnahme auch davon abhängen, für welchen Nachrichtentyp die Auslösebedingung erfüllt wird.

Das Verfahren kann automatisch in festen oder in variablen Zeitabständen ab Schritt S1 wiederholt werden bzw. für verschiedene Nachrichtentypen parallel durchgeführt werden. Die Abstände zwischen Wiederholungen können hierbei für unterschiedliche Nachrichtentypen unterschiedlich sein. Die Wiederholung kann nach dem Erhalt der Sender- und Empfängerantwort erfolgen, jedoch auch nach einem Timeout. Beispielsweise kann ein Ausbleiben einer Antwort von einer Sende- bzw. Empfangseinrichtung für ein vorgegebenes Zeitintervall in der Überwachungseinrichtung einen Timeout auslösen, der darauf hinweist, dass voraussichtlich keine Antwort durch diese Einrichtung erfolgen wird. In diesem Fall kann insbesondere davon ausgegangen werden, dass ein überwachungsrelevantes Ereignis vorliegt und es können entsprechende Reaktionen ausgelöst werden, wie zur Erfüllung der Auslösebedingung erläutert wurde. Hierbei können bei Vorliegen eines Timeouts auch andere Reaktionen erfolgen als bei Erfüllung der Auslösebedingung, z.B. eine Protokollierung einerseits und ein Funktionsabwurf andererseits. Ergänzend oder alternativ kann unmittelbar oder nach einer Wartezeit eine erneute Anfragenachricht bezüglich der den Timeout auslösenden Sende- oder Empfangseinrichtung gesendet werden.

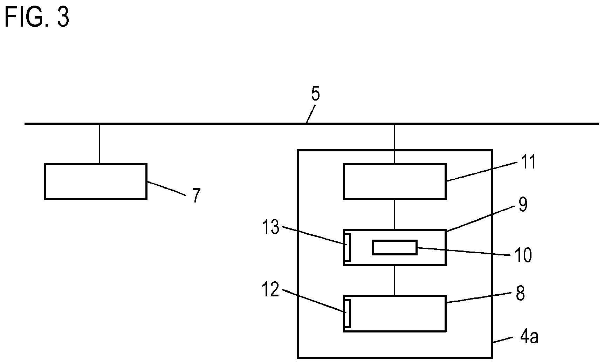

Schließlich ist in Fig. 3 eine Detailansicht einer Empfangseinrichtung 4a gezeigt, anhand der exemplarische Möglichkeiten zur Generierung der Empfängerantwort bei der Empfangseinrichtung 4a erläutert werden, wobei dieses Prinzip auch auf die Empfangseinrichtungen 4b, 4c, sowie die Sendeeinrichtungen 3a, 3b, 3c übertragbar ist. Bei diesem Beispiel ist die Empfangseinrichtung 4a über einen als CAN-Bus ausgebildeten Fahrzeugbus 5 mit der Überwachungseinrichtung 7 verbunden. Die beiden exemplarischen Möglichkeiten können als eine Hardwarelösung und eine Softwarelösung bezeichnet werden.

Die Empfangseinrichtung 4a umfasst eine Steuerungseinrichtung 8 zur Steuerung des Betriebs der Empfangseinrichtung 4a, beispielsweise zum Betrieb eines der Funktion der Empfangseinrichtung 4a zugeordneten, beispielsweise elektromechanischen, Aktors, und eine CAN-Kontrolleinheit 9 zur Steuerung des Übertragungsprozesses der Empfängernachrichten zwischen dem Fahrzeugbus 5 und der Empfangseinrichtung 4a. Die CAN-Kontrolleinheit 9 ist exemplarisch eine anwendungsspezifische integrierte Schaltung (ASIC). Ferner umfasst die Empfangseinrichtung 4a einen Nachrichtenpuffer 10 zum Zwischenspeichern von über den Fahrzeugbus 5 empfangenen Empfängernachrichten und einen Transceiver 11 als Schnittstelle zur Übertragung der Empfängernachrichten von dem Fahrzeugbus 5 an die Empfangseinrichtung 4a. Die CAN-Kontrolleinheit 9 und der Nachrichtenpuffer 10 liegen hierbei als eine gemeinsame Baueinheit in der Empfangseinrichtung 4a vor, wobei die Bereitstellung der Empfängernachrichten, die im Nachrichtenpuffer 10 gespeichert sind, an die Steuerungseinrichtung 8 von der CAN-Kontrolleinheit 9 gesteuert wird. Typischerweise werden hierbei Empfängernachrichten mit einer höheren Priorität bevorzugt vor Empfängernachrichten mit einer niedrigeren Priorität zur Steuerungseinrichtung 8 übertragen, wodurch sich gegebenenfalls die Reihenfolge, mit der Empfängernachrichten an die Steuerungseinrichtung 8 übertragen werden, von der Reihenfolge, mit der die Empfängernachrichten bei der Empfangseinrichtung 8a ankommen, unterscheidet.

Im Rahmen einer Softwarelösung kann ein Überwachungsmodul 12 zur Generierung der Empfängerantwort in der Steuerungseinrichtung 8 der Empfangseinrichtung 4a implementiert sein. Hierbei ergibt sich in einigen Anwendungsfällen, beispielsweise dann, wenn auf CAN-Bussen Nachrichten mit voneinander unterschiedlichen Prioritäten übertragen werden, die Problematik, dass sich die Reihenfolge, mit der die Empfängernachrichten von der Steuerungseinrichtung 8 empfangen werden und anhand derer mithin die Empfängerantwort generiert wird, aufgrund der Zwischenspeicherung im Nachrichtenpuffer 10 von der Reihenfolge, mit der die Empfängernachrichten tatsächlich bei der Empfangseinrichtung 4a ankommen, unterscheiden kann. Hieraus könnten sich unterschiedliche Prüfsummen aufgrund der unterschiedlichen Reihenfolgen ergeben, was gegebenenfalls zu einer falschen Erfüllung der Auslösebedingung führen kann. Diese Problematik kann dadurch vermieden bzw. zumindest eingedämmt werden, dass zur Generierung der Prüfsumme eine kommutative Operation, bei der naturgemäß die Reihenfolge der Nachrichten keine Rolle spielt, vorgesehen ist.

Demgegenüber kann bei einer Hardwarelösung vorgesehen sein, dass anstelle des Überwachungsmoduls 12 in der Steuerungseinrichtung 8 ein Überwachungsmodul 13 in der CAN-Kontrolleinheit 9 der Empfangseinrichtung 4a implementiert ist. Da hierbei die Generierung der Empfängerantwort auf Empfängernachrichten basiert, deren Reihenfolge sich noch nicht aufgrund der Pufferung der Nachrichten im Nachrichtenpuffer 10 geändert hat, tritt die im Rahmen der Softwarelösung vorliegende Problematik unterschiedlicher Prüfsummen aufgrund unterschiedlicher Reihenfolgen der Nachrichten nicht auf. In diesem Fall sind mithin auch nicht-kommutative Generierungsverfahren für die Prüfsumme, insbesondere unter Verwendung einer S-Box, denkbar. Diesbezüglich kann ein gleicher Effekt erzielt werden, wenn das Überwachungsmodul in einer bezüglich des Nachrichtenpuffers busseitigen Stelle der Empfangseinrichtung 4a, insbesondere in dem Transceiver 11, implementiert ist.

## Patentansprüche

1. Verfahren zur Überwachung eines Datenübertragungssystems (2), umfassend wenigstens eine Sendeeinrichtung (3a, 3b, 3c) zum Senden von Nachrichten, wenigstens eine Empfangseinrichtung (4a, 4b, 4c) zum Empfangen der Nachrichten, ein Datenübertragungsmittel (6) zur Übertragung der Nachrichten und eine Überwachungseinrichtung (7), wobei das Datenübertragungsmittel (6) insbesondere ein Fahrzeugbus (5) oder ein fahrzeugseitiges Netzwerk eines Kraftfahrzeugs (1) ist, **dadurch gekennzeichnet, dass**
- die Überwachungseinrichtung (7) eine Anfragenachricht an die Sendeeinrichtung (3a, 3b, 3c) und die Empfangseinrichtung (4a, 4b, 4c) sendet,
- die Sendeeinrichtung (3a, 3b, 3c) oder wenigstens eine der Sendeeinrichtungen (3a, 3b, 3c) in Abhängigkeit der Anfragenachricht und wenigstens einer von der jeweiligen Sendeeinrichtung (3a, 3b, 3c) über das Datenübertragungsmittel (6) gesendeten Sendernachricht eine jeweilige Senderantwort generiert und an die Überwachungseinrichtung (7) sendet,
- die Empfangseinrichtung (4a, 4b, 4c) oder wenigstens eine der Empfangseinrichtungen (4a, 4b, 4c) in Abhängigkeit der Anfragenachricht und wenigstens einer von der jeweiligen Empfangseinrichtung (4a, 4b, 4c) über das Datenübertragungsmittel (6) empfangenen Empfängernachricht eine jeweilige Empfängerantwort generiert und an die Überwachungseinrichtung (7) sendet, und
- die Überwachungseinrichtung (7) die Senderantwort und die Empfängerantwort empfängt und die Erfüllung einer von der Senderantwort und der Empfängerantwort abhängenden Auslösebedingung überprüft, deren Erfüllung ein überwachungsrelevantes Ereignis anzeigt.

2. Verfahren nach Anspruch 1,
**dadurch gekennzeichnet,**
**dass** die Anfragenachricht verschlüsselt und/oder mit einer Authentifizierung von der Überwachungseinrichtung (7) an die Sendeeinrichtung (3a, 3b, 3c) und/oder die Empfangseinrichtung (4a, 4b, 4c) gesendet wird, und/oder dass die Senderantwort und/oder die Empfängerantwort verschlüsselt und/oder mit einer Authentifizierung von der Sendeeinrichtung (3a, 3b, 3c) und/oder der Empfangseinrichtung (4a, 4b, 4c) an die Überwachungseinrichtung (7) gesendet werden.

3. Verfahren nach Anspruch 1 oder 2,
**dadurch gekennzeichnet,**
**dass** das Datenübertragungssystem (2) mehrere Sendeeinrichtungen (3a, 3b, 3c) und/oder Empfangseinrichtungen (4a, 4b, 4c) umfasst, wobei die Anfragenachricht als Broadcast an alle Sendeeinrichtungen (3a, 3b, 3c) und Empfangseinrichtungen (4a, 4b, 4c) des Datenübertragungssystems (2) gesendet wird.

4. Verfahren nach einem der vorangehenden Ansprüche,
**dadurch gekennzeichnet,**
**dass** durch die Sendeeinrichtung (3a, 3b, 3c) oder die Sendeeinrichtungen (3a, 3b, 3c) Sendernachrichten mit unterschiedlichen Nachrichtentypen gesendet werden und durch die Empfangseinrichtung (4a, 4b, 4c) oder die Empfangseinrichtungen (4a, 4b, 4c) Empfängernachrichten mit unterschiedlichen Nachrichtentypen empfangen werden, wobei die Anfragenachricht wenigstens eine den Nachrichtentyp beschreibende Typinformation vorgibt, wobei von der Typinformation abhängt, von Sendernachrichten welchen Nachrichtentyps die Senderantwort abhängt und/oder von Empfängernachrichten welchen Nachrichtentyps die Empfängerantwort abhängt und/oder von welcher Sendeeinrichtung (3a, 3b, 3c) die Senderantwort generiert wird und/oder von welcher Empfangseinrichtung die Empfängerantwort (4a, 4b, 4c) generiert wird.

5. Verfahren nach einem der vorangehenden Ansprüche,
**dadurch gekennzeichnet,**
**dass** über das Datenübertragungsmittel (6) Sendernachrichten mehrerer Sendeeinrichtungen (3a, 3b, 3c) und/oder Empfängernachrichten mehrerer Empfangseinrichtungen (4a, 4b, 4c) übertragbar sind, wobei die Sendeeinrichtungen (3a, 3b, 3c) und/oder Empfangseinrichtungen (4a, 4b, 4c) jeweils eine zugeordnete Netzwerkadresse aufweisen, wobei die Anfragenachricht wenigstens eine eine Netzwerkadresse beschreibende Adressinformation beinhaltet, wobei von der Adressinformation abhängt, von welchen Sendernachrichten die Senderantwort abhängt und/oder von welchen Empfängernachrichten die Empfängerantwort abhängt und/oder welche Sendeeinrichtung (3a, 3b, 3c) die Senderantwort generiert und/oder welche Empfangseinrichtung (4a, 4b, 4c) die Empfängerantwort generiert.

6. Verfahren nach einem der vorangehenden Ansprüche,
**dadurch gekennzeichnet,**
**dass** die Anfragenachricht eine Samplinganzahl beinhaltet, wobei die Anzahl der Sendernachrichten und Empfängernachrichten, von denen die Senderantwort und Empfängerantwort abhängt, von der Samplinganzahl abhängt.

7. Verfahren nach einem der vorangehenden Ansprüche,
**dadurch gekennzeichnet,**
**dass** die Sendeeinrichtung (3a, 3b, 3c) mehrere Sendernachrichten nacheinander sendet, wobei die Senderantwort eine erste Senderinformation und eine zweite Senderinformation umfasst, wobei die zweite Senderinformation von wenigstens einer Sendernachricht abhängt, die nach allen Sendernachrichten, von denen die erste Senderinformation abhängt, gesendet wird und/oder dass die Empfangseinrichtung (4a, 4b, 4c) mehrere Empfängernachrichten nacheinander empfängt, wobei die Empfängerantwort eine erste Empfängerinformation und eine zweite Empfängerinformation umfasst, wobei die zweite Empfängerinformation von wenigstens einer Empfängernachricht abhängt, die nach allen Empfängernachrichten, von denen die erste Empfängerinformation abhängt, empfangen wird.

8. Verfahren nach einem der vorangehenden Ansprüche,
**dadurch gekennzeichnet,**
**dass** ein Zeitpunkt, zu dem die Überwachungseinrichtung (7) die Anfragenachricht an die Sendeeinrichtung (3a, 3b, 3c) und die Empfangseinrichtung (4a, 4b, 4c) sendet, insbesondere der zeitliche Abstand zwischen zwei gesendeten Anfragenachrichten, und/oder die Samplinganzahl zufällig bestimmt wird.

9. Verfahren nach einem der vorangehenden Ansprüche,
**dadurch gekennzeichnet,**
**dass** die Sendeeinrichtung (3a, 3b, 3c) die Senderantwort bezüglich der Generierung der Senderantwort nach Verstreichen einer Wartezeit an die Überwachungseinrichtung (7) sendet und/oder dass die Empfangseinrichtung (4a, 4b, 4c) die Empfängerantwort bezüglich der Generierung der Empfängerantwort nach Verstreichen einer Wartezeit an die Überwachungseinrichtung (7) sendet.

10. Verfahren nach Anspruch 9,
**dadurch gekennzeichnet,**
**dass** die Wartezeit fest vorgegeben ist oder zufällig bestimmt wird.

11. Verfahren nach einem der vorangehenden Ansprüche,
**dadurch gekennzeichnet,**
**dass** die Senderantwort die Senderinformationen oder eine Senderinformation beinhaltet, deren Berechnung durch Anwenden einer kommutativen Operation auf zumindest Teile der Sendernachrichten, von denen die Senderantwort abhängt, oder auf Informationsfelder dieser Sendernachrichten erfolgt, und dass die Empfängerantwort die Empfängerinformationen oder eine Empfängerinformation beinhaltet, deren Berechnung durch Anwenden einer kommutativen Operation auf zumindest Teile der Empfängernachrichten, von denen die Empfängererantwort abhängt, oder auf Informationsfelder dieser Empfängernachrichten erfolgt, wobei die Auslösebedingung erfüllt ist, wenn die Senderinformation und die Empfängerinformation unterschiedlich sind oder keinen vorgegebenen Zusammenhang aufweisen oder wenn keine der Senderinformationen mit einer der Empfängerinformationen übereinstimmt oder den vorgegebenen Zusammenhang aufweist.

12. Verfahren nach einem der vorangehenden Ansprüche,
**dadurch gekennzeichnet,**
**dass** bei Erfüllung der Auslösebedingung eine Protokollierung einer das überwachungsrelevante Ereignis beschreibenden Ereignisinformation und/oder eine Übertragung der Ereignisinformation an eine fahrzeugexterne Einrichtung und/oder eine Ausgabe eines Warnsignals an einen Nutzer, insbesondere einen Fahrer eines Kraftfahrzeugs (1), das das Datenübertragungsmittel (6) umfasst, und/oder eine Außerbetriebnahme und/oder eine Modifikation einer von dem überwachungsrelevanten Ereignis betroffenen Funktion, insbesondere einer Fahrzeugfunktion des Kraftfahrzeugs (1), erfolgt.

13. Verfahren nach einem der vorangehenden Ansprüche,
**dadurch gekennzeichnet,**
**dass** das Datenübertragungsmittel (6) mehrere verschiedene Busse und/oder Netzwerke umfasst und/oder dass das als Datenübertragungsmittel (6) oder als Teil des Datenübertragungsmittels (6) ein CAN-Bus und/oder ein CAN FD-Bus und/oder ein LIN-Bus und/oder ein FlexRay-Bus und/oder ein I2C-Bus und/oder ein Uart-Bus und/oder ein PCIe-Bus und/oder ein SPI-Bus und/oder ein Ethernet verwendet wird oder werden.

14. Datenübertragungssystem umfassend wenigstens eine Sendeeinrichtung (3a, 3b, 3c) zum Senden von Nachrichten, wenigstens eine Empfangseinrichtung (4a, 4b, 4c) zum Empfangen der Nachrichten, ein Datenübertragungsmittel (6) zur Übertragung der Nachrichten und eine Überwachungseinrichtung (7), wobei das Datenübertragungsmittel (6) insbesondere ein Fahrzeugbus (5) oder ein fahrzeugseitiges Netzwerk eines Kraftfahrzeugs (1) ist, wobei das Datenübertragungssystem (2) zur Durchführung des Verfahrens nach einem der vorangehenden Ansprüche eingerichtet ist.

15. Kraftfahrzeug umfassend ein Datenübertragungssystem (2) nach Anspruch 14.

## Claims

1. Method for monitoring a data transmission system (2), comprising at least one transmitting device (3a, 3b, 3c) for transmitting messages, at least one receiving device (4a, 4b, 4c) for receiving messages, a data transmission means (6) for transmitting the messages and a monitoring device (7), wherein the data transmission means (6) is in particular a vehicle bus (5) or a vehicle-side network of a motor vehicle (1),
**characterised in that**
- the monitoring device (7) transmits a request message to the transmitting device (3a, 3b, 3c) and the receiving device (4a, 4b, 4c),
- depending on the request message and at least one transmitter message transmitted by the respective transmitting device (3a, 3b, 3c) via the data transmission means (6), the transmitting device (3a, 3b, 3c) or at least one of the transmitting devices (3a, 3b, 3c) generates a respective transmitter response and transmits it to the monitoring device (7),
- depending on the request message and at least one receiver message received by the respective receiving device (4a, 4b, 4c) via the data transmission means (6), the receiving device (4a, 4b, 4c) or at least one of the receiving devices (4a, 4b, 4c) generates a respective receiver response and transmits it to the monitoring device (7), and
- the monitoring device (7) receives the transmitter response and the receiver response and checks the fulfilment of a triggering condition depending on the transmitter response and the receiver response, the fulfilment of which displays a monitoring-relevant event.

2. Method according to claim 1,
**characterised in that**
the request message is transmitted encrypted and/or with an authentication from the monitoring device (7) to the transmitting device (3a, 3b, 3c) and/or the receiving device (4a, 4b, 4c), and/or that the transmitter response and/or the receiver response are transmitted encrypted and/or with an authentication from the transmitting device (3a, 3b, 3c) and/or the receiving device (4a, 4b, 4c) to the monitoring device (7).

3. Method according to claim 1 or 2,
**characterised in that**
the data transmission system (2) comprises a plurality of transmitting devices (3a, 3b, 3c) and/or receiving devices (4a, 4b, 4c), wherein the request message is transmitted as a broadcast to all transmitting devices (3a, 3b, 3c) and receiving devices (4a, 4b, 4c) of the data transmission system (2).

4. Method according to any of the preceding claims,
**characterised in that**
transmitter messages with different message types are transmitted by the transmitting device (3a, 3b, 3c) or the transmitting devices (3a, 3b, 3c) and receiver messages with different message types are received by the receiving device (4a, 4b, 4c) or the receiving devices(4a, 4b, 4c), wherein the request message specifies at least one item of type information describing the message type, wherein it is dependent on the item of type information, on which message type of transmitter message the transmitter response depends, and/or on which message type of receiver message the receiver response depends, and/or by which transmitting device (3a, 3b, 3c) the transmitter response is generated and/or by which receiving device the receiver response (4a, 4b, 4c) is generated.

5. Method according to any of the preceding claims,
**characterised in that**
transmitter messages of a plurality of transmitting devices (3a, 3b, 3c) and/or receiver messages of a plurality of receiving devices (4a, 4b, 4c) can be transmitted via the data transmission means (6), wherein the transmitting devices (3a, 3b, 3c) and/or receiving devices (4a, 4b, 4c) have in each case an assigned network address, wherein the request message contains at least one item of address information describing a network address, wherein it depends on the address information on which transmitter messages the transmitter response depends and/or on which receiver messages the receiver response depends and/or which transmitting device (3a, 3b, 3c) generates the transmitter response and/or which receiving device (4a, 4b, 4c) generates the receiver response.

6. Method according to any of the preceding claims,
**characterised in that**
the request message contains a sampling number, wherein the number of the transmitter messages and receiver messages, on which the transmitter response and receiver response depends, depends on the sampling number.

7. Method according to any of the preceding claims,
**characterised in that**
the transmitting device (3a, 3b, 3c) transmits a plurality of transmitter messages in succession, wherein the transmitter response comprises a first item of transmitter information and a second item of transmitter information, wherein the second item of transmitter information depends on at least one transmitter message which is transmitted after all transmitting messages on which the first item of transmitter information depends and/or that the receiving device (4a, 4b, 4c) receives a plurality of receiver messages in succession, wherein the receiver message comprises a first item of receiver information and a second item of receiver information, wherein the second item of receiver information depends on at least one receiver message which is received after all receiver messages on which the first item of receiver information depends.

8. Method according to any of the preceding claims,
**characterised in that**
a time point at which the monitoring device (7) transmits the request message to the transmitting device (3a, 3b, 3c) and the receiving device (4a, 4b, 4c), in particular the chronological interval between two transmitted request messages, and/or the sampling number is determined at random.

9. Method according to any of the preceding claims,
**characterised in that**
the transmitting device (3a, 3b, 3c) transmits the transmitter response, with regard to the generation of the transmitter response, to the monitoring device (7) after a waiting time has elapsed, and/or that the receiving device (4a, 4b, 4c) transmits the receiver response, with regard to the generation of the receiver response, to the monitoring device (7) after a waiting time has elapsed.

10. Method according to claim 9,
**characterised in that**
the waiting time is fixed or is determined at random.

11. Method according to any of the preceding claims
**characterised in that**
the transmitter response contains the items of transmitter information or an item of transmitting information, the calculation of which by applying a commutative operation follows on at least some of the transmitter messages on which the transmitter response depends, or on information fields of these transmitter messages, and that the receiver response contains the items of receiver information or an item of receiver information, the calculation of which by applying a commutative operation follows on at least some of the receiver messages on which the receiver response depends, or on information fields of these receiver messages, wherein the trigger condition is fulfilled when the item of transmitter information and the item of receiver information are different or have no specified connection or when none of the items of transmitter information corresponds with one of the items of receiver information or has the specified connection.

12. Method according to any of the preceding claims,
**characterised in that**
when the trigger condition is fulfilled, an logging of an item of event information describing the monitoring-relevant event and/or a transmission of the item of event information to a device external to the vehicle and/or an output of a warning signal to a user, in particular a driver of a motor vehicle (1) which comprises the data transmission means (6), and/or a decommissioning and/or a modification of a function affected by the monitoring-relevant event, in particular a vehicle function of the motor vehicle (1), takes place.

13. Method according to any of the preceding claims,
**characterised in that**
the data transmission means (6) comprises a plurality of different buses and/or networks and/or that the as data transmission means (6) or as part of the data transmission means (6) a CAN-bus and/or a CAN FD-bus and/or a LIN-bus and/or a FlexRay-bus and/or an I2C-bus and/or an Uart-bus and/or a PCIe-bus and/or a SPI-bus and/or an ethernet is used or are used.

14. Data transmission system comprising at least one transmitting device (3a, 3b, 3c) for transmitting messages, at least one receiving device (4a, 4b, 4c) for receiving the messages, a data transmission means (6) for transmitting the messages and a monitoring device (7), wherein the data transmission means (6) is in particular a vehicle bus (5) for a vehicle-side network of a motor vehicle (1), wherein the data transmission system (2) is configured to carry out the method according to any of the preceding claims.

15. Motor vehicle comprising a data transmission system (2) according to claim 14.

## Revendications

1. Procédé de surveillance d'un système de transmission de données (2), comprenant au moins un appareil d'émission (3a, 3b, 3c) pour l'émission de messages, au moins un appareil de réception (4a, 4b, 4c) pour la réception des messages, un moyen de transmission de données (6) pour la transmission des messages et un appareil de surveillance (7), dans lequel le moyen de transmission de données (6) est en particulier un bus de véhicule (5) ou un réseau côté véhicule d'un véhicule automobile (1), **caractérisé en ce**
- **que** l'appareil de surveillance (7) émet un message de demande à l'appareil d'émission (3a, 3b, 3c) et à l'appareil de réception (4a, 4b, 4c),
- **que** l'appareil d'émission (3a, 3b, 3c) ou au moins un des appareils d'émission (3a, 3b, 3c) génère une réponse d'émetteur respective en fonction du message de demande et d'au moins un message d'émetteur émis par l'appareil d'émission respectif (3a, 3b, 3c) par l'intermédiaire du moyen de transmission de données (6) et l'émet à l'appareil de surveillance (7),
- **que** l'appareil de réception (4a, 4b, 4c) ou au moins un des appareils de réception (4a, 4b, 4c) génère une réponse de récepteur respective en fonction du message de demande et d'au moins un message de récepteur reçu par l'appareil de réception respectif (4a, 4b, 4c) par l'intermédiaire du moyen de transmission de données (6) et l'émet à l'appareil de surveillance (7), et
- **que** l'appareil de surveillance (7) reçoit la réponse d'émetteur et la réponse de récepteur et vérifie la réalisation d'une condition de déclenchement dépendant de la réponse d'émetteur et de la réponse de récepteur, dont la réalisation indique un événement pertinent pour la surveillance.

2. Procédé selon la revendication 1,
**caractérisé en ce**
**que** le message de demande est émis sous forme chiffrée et/ou avec une authentification de l'appareil de surveillance (7) à l'appareil d'émission (3a, 3b, 3c) et/ou à l'appareil de réception (4a, 4b, 4c), et/ou **en ce que** la réponse d'émetteur et/ou la réponse de récepteur sont émises sous forme chiffrée et/ou avec authentification de l'appareil d'émission (3a, 3b, 3c) et/ou de l'appareil de réception (4a, 4b, 4c) à l'appareil de surveillance (7).

3. Procédé selon la revendication 1 ou 2,
**caractérisé en ce**
**que** le système de transmission de données (2) comprend plusieurs appareils d'émission (3a, 3b, 3c) et/ou d'appareils de réception (4a, 4b, 4c), dans lequel le message de demande est émis en tant que diffusion à tous les appareils d'émission (3a, 3b, 3c) et appareils de réception (4a, 4b, 4c) du système de transmission de données (2).

4. Procédé selon l'une quelconque des revendications précédentes,
**caractérisé en ce**
**que** des messages d'émetteur avec différents types de message sont émis par l'appareil d'émission (3a, 3b, 3c) ou les appareils d'émission (3a, 3b, 3c) et des messages de récepteur avec différents types de message sont reçus par l'appareil de réception (4a, 4b, 4c) ou les appareils de réception (4a, 4b, 4c), dans lequel le message de demande spécifie au moins une information de type décrivant le type de message, dans lequel l'information de type détermine à partir de quels messages d'émetteur dont le type de message la réponse d'émetteur dépend et/ou à partir de quels messages de récepteur dont le type de message la réponse de récepteur dépend et/ou à partir de quel appareil d'émission (3a, 3b, 3c) la réponse d'émetteur est générée et/ou à partir de quel appareil de réception la réponse de récepteur (4a, 4b, 4c) est générée.

5. Procédé selon l'une quelconque des revendications précédentes,
**caractérisé en ce**
**que** des messages d'émission de plusieurs appareils d'émission (3a, 3b, 3c) et/ou des messages de réception de plusieurs appareils de réception (4a, 4b, 4c) peuvent être émis par l'intermédiaire du moyen de transmission de données (6), dans lequel les appareils d'émission (3a, 3b, 3c) et/ou les appareils de réception (4a, 4b, 4c) présentent chacun une adresse réseau attribuée, dans lequel le message de demande contient au moins une information d'adresse décrivant une adresse réseau, dans lequel l'information d'adresse détermine à partir de quels messages d'émetteur la réponse d'émetteur dépend et/ou de quels messages de récepteur la réponse de récepteur dépend et/ou quel appareil d'émission (3a, 3b, 3c) génère la réponse d'émetteur et/ou quel appareil de réception (4a, 4b, 4c) génère la réponse de récepteur.

6. Procédé selon l'une quelconque des revendications précédentes,
**caractérisé en ce**
**que** le message de demande contient un nombre d'échantillonnages, dans lequel le nombre de messages d'émetteur et de messages de récepteur dont dépendent la réponse d'émetteur et la réponse de récepteur dépend du nombre d'échantillonnages.

7. Procédé selon l'une quelconque des revendications précédentes,
**caractérisé en ce**
**que** l'appareil d'émission (3a, 3b, 3c) émet plusieurs messages d'émetteur en succession, dans lequel la réponse d'émetteur comprend une première information d'émetteur et une seconde information d'émetteur, dans lequel la seconde information d'émetteur dépend d'au moins un message d'émetteur qui est émis après tous les messages d'émetteur dont dépend la première information d'émetteur, et/ou **en ce que** l'appareil de réception (4a, 4b, 4c) reçoit plusieurs messages de récepteur en succession, dans lequel la réponse de récepteur comprend une première information de récepteur et une seconde information de récepteur, dans lequel la seconde information de récepteur dépend d'au moins un message de récepteur reçu après tous les messages de récepteur dont dépend la première information de récepteur.

8. Procédé selon l'une quelconque des revendications précédentes,
**caractérisé en ce**
**qu'**un moment auquel l'appareil de surveillance (7) émet le message de demande à l'appareil d'émission (3a, 3b, 3c) et à l'appareil de réception (4a, 4b, 4c), en particulier l'intervalle de temps entre deux messages de demande transmis, et/ou le nombre d'échantillonnages est déterminé de manière aléatoire.

9. Procédé selon l'une quelconque des revendications précédentes,
**caractérisé en ce**
**que** l'appareil d'émission (3a, 3b, 3c) émet la réponse d'émetteur concernant la génération de la réponse d'émetteur à l'appareil de surveillance (7) après l'écoulement d'un temps d'attente et/ou **en ce que** l'appareil de réception (4a, 4b, 4c) émet la réponse de récepteur concernant la génération de la réponse de récepteur à l'appareil de surveillance (7) après l'écoulement d'un temps d'attente.

10. Procédé selon la revendication 9,
**caractérisé en ce**
**que** le temps d'attente est fixé ou déterminé de manière aléatoire.

11. Procédé selon l'une quelconque des revendications précédentes,
**caractérisé en ce**
**que** la réponse d'émetteur contient les informations d'émetteur ou une information d'émetteur dont le calcul est effectué en appliquant une opération commutative à au moins des parties des messages d'émetteur dont dépend la réponse d'émetteur ou à des champs d'information de ces messages d'émetteur, et **en ce que** la réponse de récepteur contient l'information de récepteur ou une information de récepteur dont le calcul est effectué en appliquant une opération commutative à au moins des parties des messages de récepteur, dont dépend la réponse de récepteur ou des champs d'information de ces messages de récepteur, dans lequel la condition de déclenchement est satisfaite si les informations d'émetteur et les informations de récepteur sont différentes ou ne présentent pas de relation prédéterminée ou si aucune des informations de l'émetteur ne correspond à une des informations du récepteur ou ne présente la relation prédéterminée.

12. Procédé selon l'une quelconque des revendications précédentes,
**caractérisé en ce**
**que**, lorsque la condition de déclenchement est remplie, il se produit un enregistrement d'une information d'événement décrivant l'événement pertinent pour la surveillance et/ou une transmission de l'information d'événement à un appareil externe au véhicule et/ou une émission d'un signal d'avertissement à un utilisateur, en particulier un conducteur d'un véhicule automobile (1) qui comprend le moyen de transmission de données (6), et/ou une mise hors service et/ou une modification d'une fonction concernée par l'événement pertinent pour la surveillance, en particulier une fonction de véhicule du véhicule automobile (1).

13. Procédé selon l'une quelconque des revendications précédentes,
**caractérisé en ce**
**que** le moyen de transmission de données (6) comprend plusieurs bus et/ou réseaux différents et/ou **en ce qu'**un bus CAN et/ou un bus CAN FD et/ou un bus LIN et/ou un bus FlexRay et/ou un bus I2C et/ou un bus Uart et/ou un bus PCle et/ou un bus SPI et/ou un Ethernet est ou sont utilisés en tant que moyen de transmission de données (6) ou en tant que partie du moyen de transmission de données (6).

14. Système de transmission de données comprenant au moins un appareil d'émission (3a, 3b, 3c) pour l'émission de messages, au moins un appareil de réception (4a, 4b, 4c) pour la réception des messages, un moyen de transmission de données (6) pour la transmission des messages et un appareil de surveillance (7), dans lequel le moyen de transmission de données (6) est en particulier un bus de véhicule (5) ou un réseau côté véhicule d'un véhicule automobile (1), dans lequel le système de transmission de données (2) est conçu pour la mise en œuvre du procédé selon l'une quelconque des revendications précédentes.

15. Véhicule automobile comprenant un système de transmission de données (2) selon la revendication 14.
